# EUROPEAN PATENT SPECIFICATION

(11) **EP 3 322 864 B1**
(45) Date of publication and mention of the grant of the patent: **21.07.2021**
(21) Application number: 16732936.6
(22) Date of filing: 25.05.2016
(51) Int. Cl.: E04F 15/08, E04F 15/024

(54) **HOLLOW-FLOOR ELEMENTS AND METHOD FOR MANUFACTURING A HOLLOW-FLOOR ELEMENT**
HOHLBODENELEMENTE UND VERFAHREN ZUR HERSTELLUNG EINES HOHLBODENELEMENTS
ÉLÉMENTS DE PLANCHER CREUX ET PROCÉDÉ DE FABRICATION D'UN ÉLÉMENT DE PLANCHER CREUX

(30) Priority: 15.07.2015 DE 102015008916; 21.07.2015 DE 102015009280
(43) Date of publication of application: 23.05.2018
(73) Proprietor: Knauf Gips KG, 97346 Iphofen (DE)
(72) Inventor: BURCZECK, Jürgen, 97340 Segnitz (DE); TSVETANOV, Vladimir Stefanov, BG-3700 Vidin (BG); IVANOVA-TSANEVA, Vanya Stancheva, BG-3700 Vidin (BG); VLAHOV, Ventzislav, BG-1220 Sofia (BG); AMZOVA, Elizabeta, BG-3700 Vidin (BG)
(74) Representative: Stolmár & Partner Patentanwälte PartG mbB
(86) International application number: PCT/EP2016/000867
(87) International publication number: WO 2017/008869

(56) References cited:
- DE-A1- 1 805 126
- DE-A1- 4 021 963
- US-A- 5 632 848

## Description

The invention relates to a method for manufacturing hollow-floor elements and to such elements. In particular the invention relates to hollow-floor panels manufactured from gypsum fibreboards.

Hollow-floor panels (cavity flooring) are known in the art. DE 40 21 963 A1 describes a hollow floor comprising individual support plates. US 5,632,848 describes a continuous manufacturing line for the preparation of gypsum fiberboards by means of a wet process. If a cavity is provided below the walk-on floor level, which is to be utilised for laying pipes and cables, the walk-on floor must have a support structure above the floor of the cavity. Such flooring is generally known as cavity flooring. Sheet-panelled access floors and raised access floors are hollow floors. The essential difference between sheet-panelled access floors and raised access floors consists in the way in which they are installed and in the size of their individual panels.

A raised access floor consists of individual elements which are easy to handle, and which at their edges or even at the corners rest on a support structure. Individual elements are connected with each other in a detachable or non-detachable manner. With sheet-panelled access floors, on the other hand, individual elements are connected among each other forming a contiguous floor body. Individual elements may be connected, for example, by means of a tongue-and-groove system, wherein a fixed connection may be achieved by screwing and/or gluing. In the case of sheet-panelled access floors individual elements are fixedly installed and can no longer be removed again. As a rule individual elements of sheet-panelled access floors are twice as large as individual elements of raised access floors.

Since with sheet-panelled access flooring individual elements can no longer be removed without a great deal of effort and expense, these hollow floors have access hatches in order to cater for maintenance work to pipes or cables installed below the floor. The access hatches are normally provided in individual elements as recesses with a closable lid.

A raised access floor is different from a sheet-panelled access floor in that it not only contains individual access hatches but in that all individual elements can in principle be removed again individually after the floor has been laid, in order to allow access to the cavity below the floor. Therefore access hatches are not necessary.

So as to ensure that individual elements can be removed as easily as possible, individual elements are usually supported only in their corner and/or edge areas by the sub-structure. The support surface of individual elements is therefore very small, but it must nevertheless withstand heavy loads placed on it by for example heavy pieces of furniture. Therefore floor panels which are suitable for such raised access floors must comprise extremely high stability, i.e. be sufficiently robust and resistant to mechanical stresses in compliance with EN 12825.

Hollow-floor panels or individual elements of the hollow floor may be manufactured from several materials, for example from gypsum fibreboard. Gypsum fibreboards may be produced in several ways, i.e. by means of a so-called dry, semi-dry or wet process.

The stability of gypsum fibreboards can be generally increased in three different ways, i.e. the strength/thickness of the panels can be increased; the density of the panels can be increased; the panels may contain reinforcing materials.

If dry or semi-dry processes are used for the manufacture of gypsum fibreboards, increasing the strength/thickness of the panels, however, is limited. When using the dry process, this is started by laying a carpet of dry fibres and dry calcium sulphate material (usually calcium sulphate semi-hydrate). This carpet is smoothed and sprayed with/soaked in the liquid constituents, mainly water and additives. Water is necessary for setting the gypsum, i.e. for converting the semi-hydrate into dihydrate. In order to achieve sufficient formability and a thorough soaking of the material, an excess of water is employed during the manufacture. This excess of water is sucked off to the fullest extent possible through the fibre gypsum carpet as it sets, the carpet is compressed into a panel shape and then dried.

The method steps of soaking the semi-hydrate fibre carpet and of sucking off the surplus water limit the thickness of the panels, which can be produced by this process. The water must be able to soak the carpet right through, and a large proportion of the excess water must be able to be syphoned off in a relatively short time. Therefore, for the process to be economical, the thickness of the carpet is limited.

A further problem occurs when the soaked gypsum fibre carpet is subsequently compressed. Since the fibres are not laid in an oriented manner but essentially randomly, compression of the carpet is economically viable only up to a certain panel thickness. Normally, if the panels are manufactured by the dry or semi-dry process, the maximum panel thickness is 25 mm. This thickness is not sufficient, however, for manufacturing sufficiently stable panels for use, in particular, in raised access flooring. The minimum breaking load required for double-floor panels has been laid down in the standard DIN EN 12825 and is divided into six element classes. Class 1 stipulates a breaking load of larger than 4 kN; class 6 stipulates a breaking load of larger than 12 kN.

The DIN EN 13213 regulates the minimum requirements for sheet-panelled access floors correspondingly.

The requirement of the invention consists in providing hollow-floor elements, in particular gypsum fibreboards, which are manufactured by the dry or semi-dry process.

The requirement is met by a method for manufacturing a hollow-floor element according to claim 1, which comprises al least two superimposed load-bearing individual panels, which when placed on top of each other are firmly joined together.

A hollow-floor element manufactured according to the invention may be either a sheet-panelled access floor panel for a contiguous hollow floor or a double-floor panel for a raised access floor.

It is particularly advantageous if the superimposed individual panels of the hollow-floor element are bonded, interlocked or screwed to each other. In principle all types of individual panels known in the art, which are suitable for use in hollow flooring or raised access flooring, may be used. These may be, for example, gypsum fibreboards, laminated boards, cement-bonded fibre panels or cement-bonded laminated panels. Provision is also made according to the invention for different panel types to be combined with each other. Preferably, however, at least one individual panel consists of a gypsum fibreboard.

A load-bearing individual panel is understood to be a panel, which essentially contributes to the stability of the panel and, mainly for this reason, i.e. for the creation of sufficient stability, is integrated with the hollow-floor element. In contrast thereto, hollow-floor elements may have coatings, which, for example, are applied to a hollow-floor element for reasons of optical appearance and/or for ensuring sufficient resistance to abrasion / chemical resistance. Such coatings are not be understood as load-bearing individual panels in terms of the invention. But coatings may of course be applied additionally to a hollow-floor element according to the invention or may additionally exist.

The requirement is furthermore met by a hollow-floor element according to claim 7 comprising at least two superimposed load-bearing individual panels, wherein the at least two load-bearing panels are firmly connected with each other. Preferably individual panels are connected with each other by means of gluing, interlocking and/or screwing.

The invention is particularly helpful in cases, in which the manufacture of the hollow-floor element is limited as regards the thickness of the panels. If one of the load-bearing panels is e.g. a gypsum fibreboard, which has been produced by way of a dry process or semi-dry process, this panel, according to the present state of the art, can be produced with a thickness of max. approx. 25 mm in order to give it sufficient strength. Therefore a preferred embodiment of the invention comprises load-bearing individual panels with a thickness of between 9 and 25 mm. Gypsum fibreboards of this thickness can be produced on known plants without problems by way of a dry process or semi-dry process. There is no need for a retrofit.

It is, of course, also possible to firmly connect gypsum fibreboards with each other, which are produced by means of a wet process. Admittedly these gypsum fibreboards can be produced in greater thicknesses than those which are produced by way of a dry or semi-dry process. However, applications come to mind, in which even this greater thickness does not provide sufficient stability and a firm connection of the panels could solve this problem. Besides, the manufacture of thin panels is more economical than the manufacture of thick panels, wherefore connecting individual panels is more economical. The same is true, of course, for panels which are not gypsum fibreboards. These panels can also be advantageously firmly connected with each other in order to achieve sufficient stability in the overall bond.

It is particularly preferred if the at least two individual panels of the hollow-floor element are connected offset from each other. For example the two individual panels can be connected with each other in such a way that none of the edges of the superimposed panels finishes flush with the edges of the respectively other individual panel. Preferably the edges of the respective individual panels extend however parallel to each other, and the offset of the panels relative to each other is defined. These results in a kind of tongue-and-groove system, which makes it easier to connect a number of hollow-floor elements to form a hollow-floor or a raised access floor.

If the load-bearing individual panels are made from gypsum fibreboard, the following composition comprising at least the below-mentioned constituents, is preferred, i.e. a gypsum matrix with cellulose fibres and glass fibres.

Especially preferably the gypsum matrix consists of 100% by weight or approx. 100% by weight dihydrate. Approx. 100% by weight means that only residual amounts of semi-hydrate, e.g. max. 5% by weight, may be present in the individual panel, after it is set. The gypsum matrix is obtained during manufacture from 80 to 95% by weight β-semi-hydrate and 5 to 20% by weight α-semi-hydrate, relative to the total amount of calcium sulphate semi-hydrate. The α-semi-hydrate is added in order to improve the dehydration of the calcium sulphate fibre carpet. α-semi-hydrate normally comprises larger crystals than β-semi-hydrate. The α-semi-hydrate crystals are extremely stable against grain decay when coming into contact with water. β-semi-hydrate by contrast is very susceptible to grain decay when coming into contact with water. The use of α-semi-hydrate permits the removal by suction of a large proportion of the excess water by a filter belt, which is not required for converting the semi-hydrate into dihydrate. Its purpose is therefore to improve dehydration. This dehydration improver is instrumental in achieving a higher raw density and thickness of the panel, which in turn improves the stability of the finished panel.

According to a further preferred embodiment of the invention one gypsum fibre panel comprises cellulose fibres in an amount of 1 to 25% by weight, preferably 5 to 15% by weight and chopped glass fibres in an amount of 0.5 to 15% by weight, preferably 0.5 to 10% by weight and especially preferably 0.5 to 5% by weight, wherein the weightings refer to the mass of the mixture of all constituents. The glass fibres preferably have a length of 5 to 25 mm, preferably from 5 to 15 mm.

Such a load-bearing individual panel is therefore manufactured from a mixture, comprising at least β-semi-hydrate, α-semi-hydrate as required, cellulose fibres, glass fibres and water. The cellulose fibres are preferably present in an amount of 1 to 25, especially preferably 5 to 15% by weight with reference to the total amount of the dry mixture.

The glass fibres give additional toughness and stability to the gypsum fibreboard. The glass fibres may, for example, be chopped glass fibres, which are supplied in bunches of great length, also called rowing strands, which are chopped on site. What is essential for the manufacture of a bending-resistant and tension-resistant gypsum fibreboard, is the homogenous mixture of the dry constituents. The glass fibres must be chopped as required and then separated since they are functionally fully effective in the gypsum matrix only, if they have been separated.

In addition to the described constituents commonly used additives such as retarders, rheology additives and similar can be added, which are known to the expert.

The invention will now be explained in detail with reference to exemplary embodiments, in which:
- Fig. 1: shows a top view of a sheet-panelled access floor element;
- Fig. 2: shows a cut-out from a sheet-panelled access floor;
- Fig. 3: shows a top view of a double-floor element;
- Fig. 4: shows a cut-out from a double-floor.

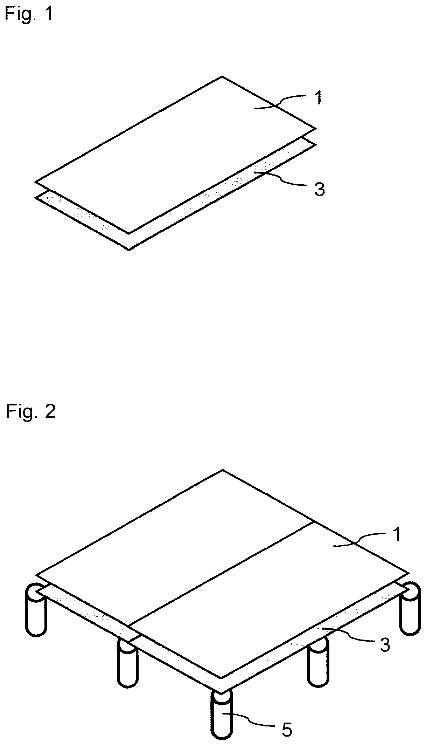

**Figure 1** shows a top view of a hollow-floor element, in this case a sheet-panelled access floor element, which consists of one first load-bearing panel 1 and one second load-bearing panel 3. Both individual panels 1, 3 are laid on top of each other and firmly joined together. The fixed connection is preferably accomplished by gluing the two individual panels together. It is, however possible, to use other ways of connecting the two panels such as by screwing, interlocking or other means known to the expert.

In this case the two load-bearing elements 1, 3 are gypsum fibreboards. It is of course also possible to produce a hollow-floor element from two or more panels of different materials firmly joined together.

The two individual panels 1, 3 are superimposed and offset from one another. Due to the offset a defined overhang is produced on the longitudinal and/or the transverse sides of the hollow-floor element. This offset can be used for joining individual hollow-floor elements in a kind of tongue-and-groove joint together, thereby forming a contiguous floor.

**Figure 2** shows a cut-out from a sheet-panelled access floor, where the hollow-floor elements of Fig. 1 are joined together in a kind of tongue-and-groove system. Individual hollow-floor elements are resting with their lower corners and edges on supports 5.

The gypsum fibreboards, which are used for manufacturing the hollow-floor elements shown in Figs. 1 and 2 each are 18 mm thick. This results in an overall thickness of 36 mm of the finished hollow-floor elements. The individual panels are manufactured by means of the dry process.

Individual panels are manufactured by mixing the following dry constituents together:

| | |
|---|---|
| β-semi-hydrate | 80% by weight with reference to the total calcium sulphate content |
| α-semi-hydrate | 20% by weight with reference to the total calcium sulphate content |
| cellulose fibres | 9% by weight with reference to all dry constituents |
| glass fibres | 3% by weight with reference to all dry constituents, length: 8 mm |

Two individual panels manufactured from this mixture are respectively arranged on top of each other and glued together. The hollow-floor elements produced in this way have a breaking load of > 6 kN, tested in accordance with DIN EN 13213.

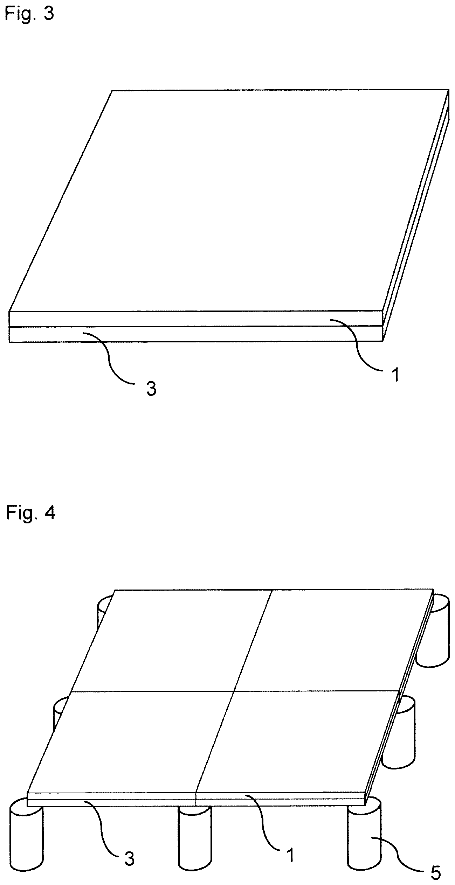

The same material was used to manufacture a double-floor element, which also consists of two individual panels 1, 3 firmly joined together, see Figs. 3, 4. In contrast to the sheet-panelled access elements shown in Figs. 1 and 2 the double-floor elements are square-shaped, In order to remove them again at any time from the finished floor without efforts, the panels have smoothly polished slightly chamfered edges such that the floor surface comprises a bigger area than the floor lower surface. The individual panels 1, 3 lie flush on top of each other.

## Claims

1. A method for manufacturing a hollow-floor element, comprising at least two superimposed load-bearing individual panels (1.3), the method comprising laying at least two load-bearing individual panels (1,3) on top of each other and firmly joining the at least two load-bearing individual panels (1.3) together, in particular by gluing, wherein at least one of the load-bearing individual panels (1,3) is a gypsum fibreboard comprising a gypsum matrix, **characterized in that** said method comprises the step of manufacturing said gypsum matrix of the gypsum fibreboard from 80 to 95% by weight calcium sulphate β-semi-hydrate and 5 to 20% by weight calcium sulphate α-semi-hydrate, relative to the total amount of the calcium sulphate semi-hydrate.

2. The method according to claim 1, wherein said gypsum fibreboard is manufactured by means of a dry process or semi-dry process.

3. The method according to claim 2, wherein the at least one load-bearing individual panel (1,3) is manufactured from a mixture, comprising at least β-semi-hydrate, α-semi-hydrate as required, cellulose fibres, glass fibres and water.

4. The method according to claim 3, wherein the mixture for manufacturing the at least one load-bearing individual panel (1,3) comprises β-semi-hydrate in an amount of 80 to 95%by weight, α-semi-hydrate in an amount of 5 to 20% by weight, with reference to the total amount of the calcium sulphate.

5. The method according to claim 3 or 4, wherein cellulose fibres in an amount of 1 to 25% by weight and chopped glass fibres in an amount of 0.5 to 15% by weight with reference to the mixture of all dry constituents are added to the mixture for manufacturing the at least one load-bearing individual panel (1,3), the chopped glass fibres preferably having a length of between 5 and 25 mm.

6. The method according to one of claims 1 to 5, wherein the method comprises firmly joining the at least two individual panels (1,3) together offset from each other.

7. A hollow-floor element for use in a hollow floor, wherein the hollow-floor element manufactured according to claim 1 comprises at least two superimposed load-bearing individual panels (1,3) which are firmly joined, in particular glued, to each other, wherein at least one of the load-bearing individual panels (1, 3) is a gypsum fibreboard comprising a gypsum matrix, **characterised in that** the gypsum matrix is obtained during manufacturing of the gypsum fibreboard from 80 to 95% by weight calcium sulphate β-semi-hydrate and 5 to 20% by weight calcium sulphate α-semi-hydrate, relative to the total amount of the calcium sulphate semi-hydrate.

8. The hollow-floor element according to claim 7, wherein the load-bearing individual panels (1,3) each have a thickness of between 9 and 25 mm.

9. The hollow-floor element according to claim 7, wherein the gypsum matrix comprises cellulose fibres and glass fibres.

10. The hollow-floor element according to claim 9, **characterised in that** the at least one individual panel (1,3) comprises cellulose fibres in an amount of 1 to 25% by weight and chopped glass fibres in an amount of 0.5 to 15% by weight, wherein the weightings refer to the mixture of all constituents.

11. The hollow-floor element according to claim 9 or 10, wherein the glass fibres have a length of between 5 and 25 mm.

12. The hollow-floor element according to one of claims 7-11, wherein the individual panels (1,3) are manufactured by means of a dry process or a semi-dry process.

13. The hollow-floor element according to one of claims 7-12, wherein the at least two individual panels are joined firmly together offset from each other.

## Patentansprüche

1. Verfahren zur Herstellung eines Hohlbodenelements, umfassend mindestens zwei übereinanderliegende tragende Einzelplatten (1, 3), wobei das Verfahren das Aufeinanderlegen von mindestens zwei tragenden Einzelplatten (1, 3) und das fest miteinander Verbinden der mindestens zwei tragenden Einzelplatten (1, 3) umfasst, insbesondere durch Kleben, wobei mindestens eine der tragenden Einzelplatten (1, 3) eine Gipsfaserplatte umfassend eine Gipsmatrix ist, **dadurch gekennzeichnet, dass** das Verfahren den Schritt des Herstellens der Gipsmatrix der Gipsfaserplatte aus 80 bis 95 Gew.-% Calciumsulfat-β-Halbhydrat und 5 bis 20 Gew.-% Calciumsulfat-α-Halbhydrat, bezogen auf die Gesamtmenge an Calciumsulfat-Halbhydrat, umfasst.

2. Verfahren nach Anspruch 1, wobei die Gipsfaserplatte mittels eines Trockenverfahrens oder Halbtrockenverfahrens hergestellt wird.

3. Verfahren nach Anspruch 2, wobei die mindestens eine tragende Einzelplatte (1, 3) aus einer Mischung hergestellt wird, die mindestens β-Halbhydrat, α-Halbhydrat soweit benötigt, Zellulosefasern, Glasfasern und Wasser umfasst.

4. Verfahren nach Anspruch 3, wobei die Mischung zur Herstellung der mindestens einen tragenden Einzelplatte (1, 3) β-Halbhydrat in einer Menge von 80 bis 95 Gew.-%, α-Halbhydrat in einer Menge von 5 bis 20 Gew.-%, bezogen auf die Gesamtmenge des Calciumsulfats, umfasst.

5. Verfahren nach Anspruch 3 oder 4, wobei Cellulosefasern in einer Menge von 1 bis 25 Gew.-% und Schnittglasfasern in einer Menge von 0,5 bis 15 Gew.-%, bezogen auf die Mischung aller Trockenbestandteile, zu der Mischung zur Herstellung der mindestens einen tragenden Einzelplatte (1, 3) zugegeben werden, wobei die Schnittglasfasern vorzugsweise eine Länge zwischen 5 und 25 mm aufweisen.

6. Verfahren nach einem der Ansprüche 1 bis 5, wobei das Verfahren das fest miteinander Verbinden der mindestens zwei Einzelplatten (1, 3) zueinander versetzt umfasst.

7. Hohlbodenelement zur Verwendung in einem Hohlboden, wobei das Hohlbodenelement hergestellt ist gemäß Anspruch 1 und mindestens zwei übereinanderliegende tragende Einzelplatten (1, 3) umfasst, die fest miteinander verbunden, insbesondere verklebt sind, wobei mindestens eine der tragenden Einzelplatten (1, 3) eine Gipsfaserplatte umfassend eine Gipsmatrix ist, **dadurch gekennzeichnet, dass** die Gipsmatrix bei der Herstellung der Gipsfaserplatte aus 80 bis 95 Gew.-% Calciumsulfat-β-Halbhydrat und 5 bis 20 Gew.-% Calciumsulfat-α-Halbhydrat, bezogen auf die Gesamtmenge an Calciumsulfat-Halbhydrat, erhalten wird.

8. Hohlbodenelement nach Anspruch 7, wobei die tragenden Einzelplatten (1, 3) jeweils eine Dicke zwischen 9 und 25 mm aufweisen.

9. Hohlbodenelement nach Anspruch 7, wobei die Gipsmatrix Cellulosefasern und Glasfasern umfasst.

10. Hohlbodenelement nach Anspruch 9, **dadurch gekennzeichnet, dass** die mindestens eine Einzelplatte (1, 3) Cellulosefasern in einer Menge von 1 bis 25 Gew.-% und Schnittglasfasern in einer Menge von 0,5 bis 15 Gew.-% umfasst, wobei sich die Gewichtsangaben auf die Mischung aller Bestandteile beziehen.

11. Hohlbodenelement nach Anspruch 9 oder 10, wobei die Glasfasern eine Länge zwischen 5 und 25 mm aufweisen.

12. Hohlbodenelement nach einem der Ansprüche 7 bis 11, wobei die Einzelplatten (1, 3) mittels eines Trockenverfahrens oder eines Halbtrockenverfahrens hergestellt sind.

13. Hohlbodenelement nach einem der Ansprüche 7 bis 12, wobei die mindestens zwei Einzelplatten zueinander versetzt fest miteinander verbunden sind.

## Revendications

1. Élément de plancher creux pour une utilisation dans un plancher creux, dans lequel l'élément de plancher creux comprend au moins deux panneaux individuels porteurs (1, 3) superposés qui sont unis fermement, en particulier collés, entre eux, **caractérisé en ce qu'**au moins l'un des panneaux individuels porteurs (1, 3) est une plaque en fibre-gypse comprenant une matrice gypse, dans lequel la matrice gypse est obtenue pendant la fabrication de la plaque en fibre-gypse à partir de 80 à 95 % en poids de semi-hydrate β de sulfate de calcium et 5 à 20 % en poids de semi-hydrate α de sulfate de calcium, par rapport à la quantité totale du sulfate de calcium.

2. Élément de plancher creux selon la revendication 1, dans lequel les panneaux individuels portants ont chacun une épaisseur entre 9 et 25 mm.

3. Élément de plancher creux selon la revendication 1, dans lequel la plaque en fibre-gypse comprend une matrice gypse avec des fibres de cellulose et des fibres de verre.

4. Élément de plancher creux selon la revendication 3, **caractérisé en ce que** l'au moins un panneau individuel comprend des fibres de cellulose dans une quantité de 1 à 25 % en poids et des fibres de verre coupées dans une quantité de 0,5 à 15 % en poids, dans lequel les pondérations se rapportent au mélange de tous les constituants.

5. Élément de plancher creux selon la revendication 3 ou 4, dans lequel les fibres de verre ont une longueur entre 5 et 25 mm.

6. Élément de plancher creux selon l'une des revendications précédentes, dans lequel les panneaux individuels sont fabriqués au moyen d'un processus sec ou un processus semi-sec.

7. Élément de plancher creux selon l'une des revendications précédentes, dans lequel les au moins deux panneaux individuels sont unis fermement entre eux décalés l'un de l'autre.

8. Procédé pour fabriquer un élément de plancher creux, de préférence selon l'une des revendications 1 à 7, comprenant au moins deux panneaux individuels porteurs (1, 3) superposés, le procédé comprenant poser au moins deux panneaux individuels porteurs (1, 3) l'un sur l'autre et unir fermement les au moins deux panneaux individuels porteurs (1, 3) entre eux, en particulier par collage, dans lequel au moins l'un des panneaux individuels porteurs (1, 3) est une plaque en fibre-gypse comprenant une matrice gypse, et dans lequel la matrice gypse est obtenue pendant la fabrication de la plaque en fibre-gypse à partir de 80 à 95 % en poids de semi-hydrate β de sulfate de calcium et 5 à 20 % en poids de semi-hydrate α de sulfate de calcium, par rapport à la quantité totale du sulfate de calcium.

9. Procédé selon la revendication 8, dans lequel au moins l'un des panneaux individuels porteurs est une plaque en fibre-gypse, qui est fabriquée au moyen d'un processus sec ou un processus semi-sec.

10. Procédé selon la revendication 9, dans lequel l'au moins un panneau individuel porteur est fabriqué à partir d'un mélange, comprenant au moins du semi-hydrate β, du semi-hydrate α comme requis, des fibres de cellulose, des fibres de verre et de l'eau.

11. Procédé selon la revendication 9 ou 10, dans lequel le mélange pour fabriquer le panneau individuel porteur comprend du semi-hydrate β dans une quantité de 80 à 95 % en poids, du semi-hydrate α dans une quantité de 5 à 20 % en poids, par rapport à la quantité totale du sulfate de calcium.

12. Procédé selon la revendication 10 ou 11, dans lequel des fibres de cellulose dans une quantité de 1 à 25 % en poids et des fibres de verre coupées dans une quantité de 0,5 à 15 % en poids par rapport au mélange de tous les composants secs sont ajoutées au mélange pour fabriquer l'au moins un panneau individuel portant, les fibres de verre coupées ayant de préférence une longueur entre 5 et 25 mm.

13. Procédé selon l'une des revendications 8 à 12, dans lequel le procédé comprend unir fermement les au moins deux panneaux individuels entre eux décalés l'un de l'autre.
